# EUROPEAN PATENT APPLICATION

(11) **EP 1 524 122 A1**
(43) Date of publication of application: **20.04.2005**
(21) Application number: 04103394.5
(22) Date of filing: 15.07.2004
(51) Int. Cl.: B41J 11/00

(54) **Apparatus having printing function with sheet edge detection**

(30) Priority: 15.07.2003 KR 2003048430
(71) Applicant: Samsung Electronics Co., Ltd., Suwon-si, Gyeonggi-Do 442-742 (KR)
(72) Inventor: Kim, Tae-young 143-1502 Hwanggol Maeul, Suwon-si, Gyeonggi-do (KR)
(74) Representative: Read, Matthew Charles

(57) **Abstract**

A print media edge detection method including: generating reference data by scanning an edge zone of a sheet of print media using an optical sensor and detecting the amount of reflected light; if the edge zone of the sheet lies in a sensing zone of the optical sensor, calculating measuring data by scanning the edge zone and detecting the amount of reflected light; checking a voltage range of the edge zone from the measuring data, calculating a most frequently appearing voltage value within the voltage range, and setting the most frequently appearing voltage value as an edge position voltage value; and setting a position of the sheet corresponding to the edge position voltage value in the reference data as an edge position. Since the edge position is exactly detected, a printing error of the edge position decreases.

## Description

The present invention relates to an apparatus having a printing function, such as a printer or a fax machine.

Printing apparatuses which can perform marginless printing are known. However, errors in the detection of the edges of sheets to be printed on can result in the printing areas not perfectly matching the sheets to be printed on. For example, when printing at the bottom edge is performed, a jump effect may occur, by which a sheet, transported into a printing zone by feeding rollers, is transported further than necessary due to the print media escape speed when the sheet is freed from the feeding rollers. The jump effect occurs since the sheet cannot be firmly held by the discharging rollers only.

This problem is addressed in US-A-6352332 and US-A-6079892.

Figures 1 and 2 are graphs illustrating a print media edge detection method disclosed US-A-6352332.

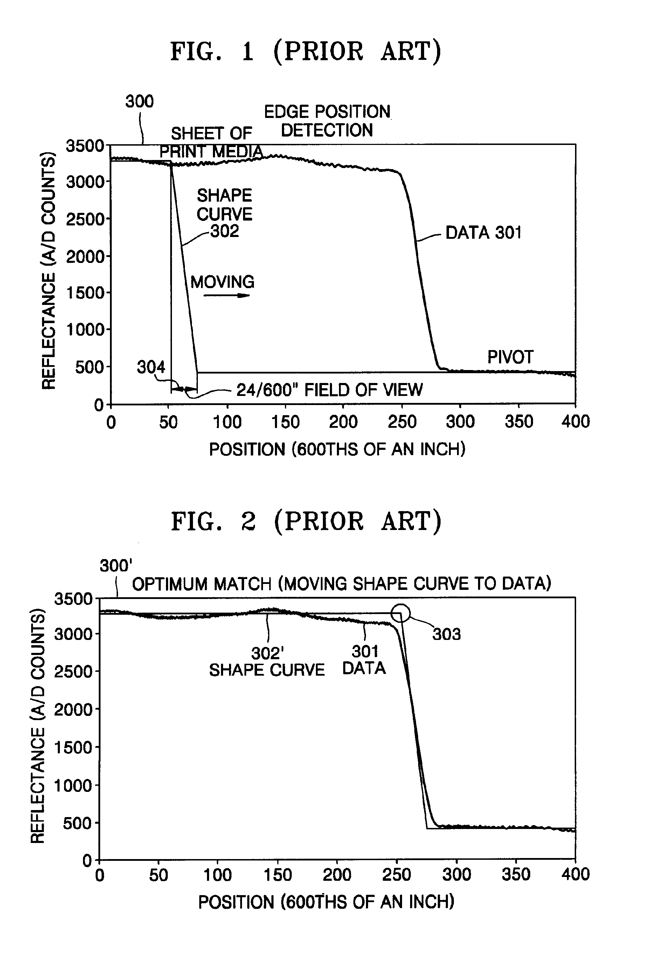

Referring to Figure 1, the measured reflectance data 301, obtained by scanning the obverse of a sheet of print media using an optical sensor, is plotted against position is. With reference to the data 301, the reflectance is about 3,300 A/D (analogue-to-digital converter) counts for most of the sheet, gradually decreasing near the edge. The reflected light dramatically decreases beyond the edge of the sheet and is only about 490 A/D counts on a pivot. The pivot means a printing zone including a platen having a width greater than a predetermined maximum width for print media used with the hard copy apparatus. A shape curve 302, in accordance with Equation 1, is formed by calculating a high average reflectance and a low average reflectance from a plurality of samples and considering the field of view of the optical sensor.$\text{Equation 1} \text{slope=(high average reflectance-low average reflectance) ÷ field of view.}$

When the shape curve 302 is moved in the direction of the arrow by a distance, corresponding to a predetermined error value, to find the real edge position using a reference edge position, a plot 300', which is a linear translation of shape curve 302', is obtained, as shown in Figure 2. With reference to Figure 2, in the known method, a position corresponding to an edge 303, where the reflectance suddenly decreases, that is, 250 (*1/600 inch (0.0423mm)) is set as the edge position.

However, in the print media edge detection method disclosed in US-A-6352332, when the shape curve 302' is formed, the slope start position is not accurate and the position uncertainly of the edge 303 can be large.

Figure 3 is a graph to illustrating a print media edge detection method disclosed in US-A-6079892.

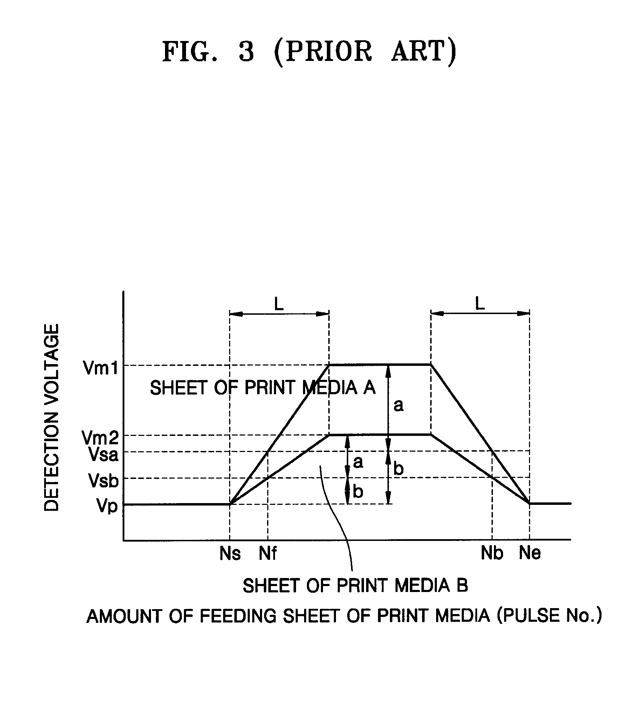

Referring to Figure 3, a detection voltage is obtained according to the amount of feeding print media. A standard voltage Vsa of a print medium A is obtained by multiplying a predetermined constant number C by the voltage difference between a maximum reflectance Vm1 for the print medium A and a voltage Vp detected when the platen is exposed and another standard voltage Vsb for a print medium B is obtained by multiplying the predetermined constant number C by the voltage difference between a maximum reflectance Vm2 of the print medium B and the voltage Vp. The constant number C is a value proportional to the amount of light reflected from the print medium, or platen if no print medium is present. When the print medium is not fed, C=0, and when all the light beam from a sensor is reflected, since the print medium is perfectly fed, C=1. The C value is set to an appropriate value between 0 and 1, i.e. for example, 0.3.

In the print media edge detection method disclosed in US-A-6079892, when margin printing is performed, a real time voltage value can be obtained from the amount of reflected light from the print media edge position using an optical sensor and if a voltage value approaching the standard voltage Vsa or Vsb is obtained, feeding of the print medium is stopped and printing is performed.

However, in the print media edge detection method disclosed in US-A-6079892, since the C value is represented only by a value related to the reflectance, exact data about the C value is not given and the uncertainty of the standard voltage Vsa or Vsb is large.

The present invention provides a print media edge detection method and apparatus capable of detecting a substantially exact edge position so as to effectively perform printing on the edge position.

According to an aspect of the present invention, a print media edge detection method comprises: generating reference data by scanning an edge zone of a sheet of print media using an optical sensor and detecting an amount of reflected light; if the edge zone of the sheet lies in a sensing zone of the optical sensor, calculating measuring data by scanning the edge zone and detecting the amount of reflected light; checking a voltage range of the edge zone from the measuring data, calculating a most frequently appearing voltage value within the voltage range, and setting the most frequently appearing voltage value as an edge position voltage value; and setting a position of the sheet corresponding to the edge position voltage value in the reference data as an edge position.

According to another aspect of the invention, the generating reference data comprises: measuring the amount of reflected light by scanning the edge zone using the optical sensor; converting the amount of reflected light to a voltage value by photoelectric conversion; and generating the reference data representing the voltage value according to a position of the edge zone.

According to another aspect of the invention, the generating reference data comprises scanning, performed by fixing the optical sensor and transporting the sheet of print medium, if the edge zone includes a top edge position or a bottom edge position.

According to another aspect of the invention, the generating reference data comprises scanning, performed by stopping the sheet of print medium and moving the optical sensor, if the edge zone includes a left edge position or a right edge position.

According to another aspect of the invention, the generating reference data comprises scanning performed by fixing the optical sensor and transporting the sheet of print medium, if the edge zone includes a top edge position or a bottom edge position.

According to another aspect of the invention, the calculating measuring data comprises: measuring the amount of reflected light by scanning the edge zone; converting the amount of reflected light into a voltage value by photoelectric conversion; and generating the reference data representing the voltage value according to a position of the edge zone.

According to another aspect of the invention, the calculating measuring data comprises scanning, performed by stopping the sheet of print medium and moving the optical sensor, if the edge zone includes a top edge position or a bottom edge position.

According to another aspect of the invention, the calculating measuring data comprises scanning, performed by fixing the optical sensor and moving the sheet of print medium, if the edge zone includes a left edge position or a right edge position.

According to another aspect of the invention, the calculating measuring data comprises scanning, performed by stopping the sheet of print medium and moving the optical sensor, if the edge zone includes a top edge position or a bottom edge position.

According to another aspect of the invention, the amount of light reflected from the sheet of print medium is greater than that reflected from a region except the sheet of print medium.

According to another aspect of the invention, a reflecting material is placed on the sensing zone of a bottom portion of the sheet.

According to another aspect of the present invention, a print media edge detection apparatus comprises: a roller controller which controls feeding rollers transporting a sheet of print media into a hard copy apparatus and discharging rollers discharging the sheet; a carrier controller which performs printing by controlling a carrier injecting ink on the sheet; an optical sensor controller which senses an edge zone of the sheet by controlling an optical sensor to scan the sheet; and a data calculator which generates reference data from the amount of light measured by scanning the edge zone using the optical sensor, calculates measuring data from the amount of light actually measured in the edge zone while printing, sets a most frequently appearing voltage value as an edge point voltage value, and obtains an edge position from the reference data.

According to another aspect of the invention, the data calculator generates the reference data representing a voltage value according to a position using an electric signal corresponding to the amount of light measured in the edge zone.

According to an aspect of the invention, the data calculator calculates the measuring data representing a voltage value according to a position of using the amount of light measured by scanning the edge zone by the optical sensor.

Additional and/or other aspects and advantages of the invention will be set forth in part in the description which follows and, in part, will be obvious from the description, or may be learned by practice of the invention.

The present invention can be used more effectively for an ink-jet printer. A print media edge detection method and apparatus is used for performing marginless printing.

An embodiment of the present invention will now be described, by way of example, with reference to Figures 4 to 8 of the accompanying drawings, in which:
Figures 1 and 2 are graphs illustrating a print media edge detection method disclosed in US-A-6352332;
Figure 3 is a graph illustrating a print media edge detection method disclosed in US-A-6079892;
Figure 4 is a flowchart of a print media edge detection method according to the present invention;
Figure 5 is a schematic concept diagram of a print media edge detection apparatus according to the present invention;
Figure 6 is a graph illustrating the reference data of Figure 4;
Figure 7 is a graph illustrating the measuring data of Figure 4; and
Figure 8 is a graph of voltage value appearing probabilities in percentage values obtained using values from Figure 7 to discover the most frequently appearing voltage value.

"Printing margin" means the margin of a document from which printing is excluded and "sheet margin" means the physical margin of a sheet. Accordingly, "marginless printing" means printing such that there is no printing margin because printing is effected in the "sheet margin" up to the edges of the sheet being printed on.

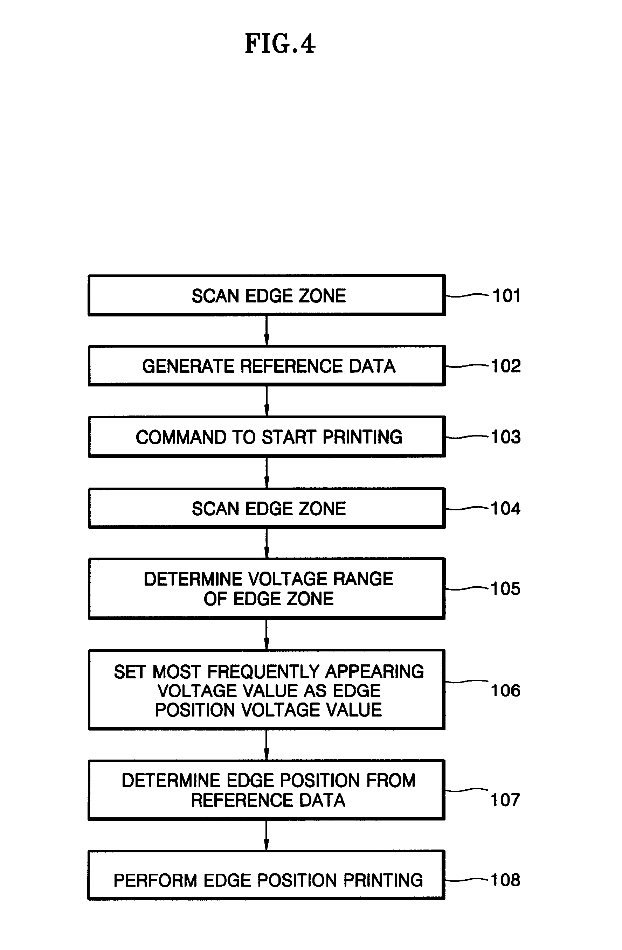

Referring to Figure 4, a method of marginless printing is comprises a procedure for generating reference data and a procedure for obtain actual measurement data and determining the position of a sheet's edge using the reference data.

The procedure for generating reference data includes scanning the sheet margin using an optical sensor 101 and generating the reference data by photoelectrically converting a light beam, detected by the optical sensor, to generate a voltage 102. The optical sensor includes a light source, such as a light emitting diode (LED), an optical detector for receiving light from the beam, which is reflected from a print medium sheet, and converting the reflected light into an electric signal, and a series of optical lenses located in the light-path between the light source and the optical detector.

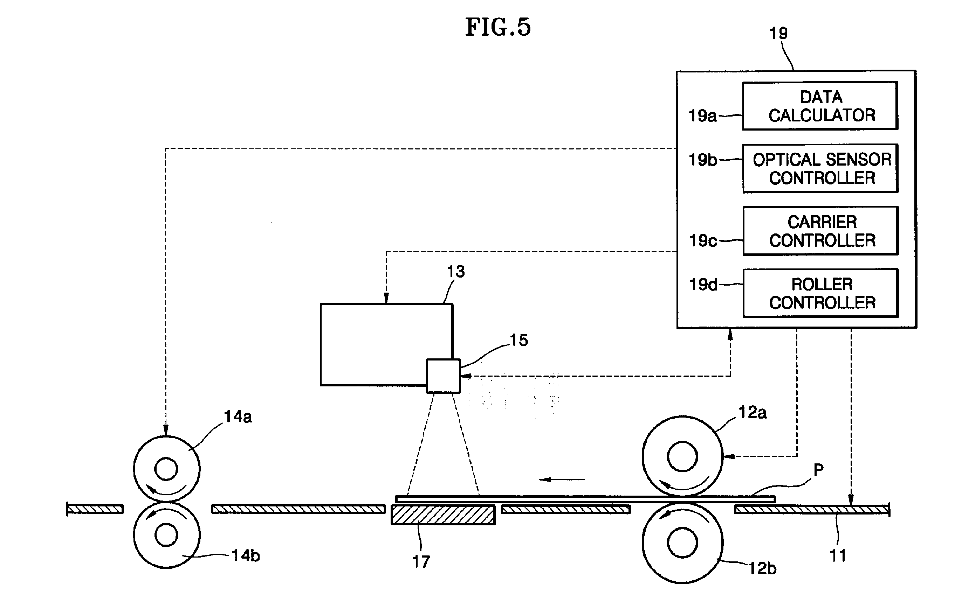

The method illustrated in Figure 4 is executed using the apparatus illustrated in Figure 5. With reference to Figure 5, a hard copy apparatus includes a platen 11, feed rollers 12a, 12b, which are fixed relative to the platen 11 and which transport sheets of print media P to a printing zone, discharging rollers 14a, 14b which discharge printed sheets P out of the hard copy apparatus, a carrier 13 which carries an ink cartridge and performs printing by ejecting ink onto sheets P and an optical sensor 15 which is installed on the carrier 13, shines the light beam on the sheets P being printed, receives the reflected light and performs the photoelectric conversion. A non-reflective material is located all over the sensing zone.

The hard copy apparatus also includes the print media edge detection apparatus 19. The detection apparatus 19 includes a data calculator 19a which calculates required data using a signal received from the optical sensor 15, an optical sensor controller 19b which outputs a signal controlling the optical sensor 15, a carrier controller 19c which outputs a signal to drive the carrier 13 and a roller controller 19d which outputs signals to control the feed rollers 12a, 12b and the discharge rollers 14a, 14b.

The roller controller 19d drives the feed rollers 12a, 12b and transports a sheet P into the printing zone. When the sheet P is transported to the printing zone under the carrier 13, the optical sensor controller 19b calculates the feed distance of the sheet P from an electric signal output from the roller controller 19d and, if the optical sensor controller 19b determines that an edge position of the sheet P is transported under the optical sensor 15, the optical sensor controller 19b irradiates a light beam on the sheet. The optical sensor 15 is installed in the carrier 13 and detects shines the light beam onto the sheet P before printing by the carrier 13 is performed.

If the leading or trailing edge positions of the sheet P are to be detected, the optical sensor 15 scans the leading edge zone or the trailing edge zone of the sheet P while the optical sensor 15 is fixed and the sheet P is fed. When the leading edge zone is being fed past the sensor 15, the amount of reflected light, detected by the optical sensor 15 gradually increases according to the increase in the proportion of the sheet P in the printing zone. On the other hand, when the trailing edge zone is fed past the sensor 15, the amount of reflected light, detected by the optical sensor 15, gradually decreases according to the decrease in the proportion of the sheet P remaining in the printing zone.

If the left or right edge positions of the sheet P are to be detected, the optical sensor 15 scans the left edge zone or the right edge zone of the sheet P while feeding of the sheet P is stopped and the optical sensor 15 is moved in the carrier moving direction which is transverse to the feeding direction. If the optical sensor 15 is moved from the left to the right, when the left edge zone is being scanned, the amount of light detected by the optical sensor 15 gradually increases. On the other hand, if the optical sensor 15 is moved from the left to the right when the right edge zone is being scanned, the amount of reflected light detected by the optical sensor 15 gradually decreases.

The optical sensor controller 19b sets the edge zone of the sheet P with a predetermined length fed from the edge position of the sheet P using length information for the sheet P and commands the optical sensor 15 to irradiate the light beam on the edge zone and scan the edge zone. The optical sensor 15 detects light corresponding to the different amounts of light reflected from the edge zone and a region, excluded from the edge zone, while scanning the edge zone of the sheet P. Since the amount of light reflected from the sheet P is greater than that reflected from the non-reflective material 17, the reference data can be provided by generating a voltage proportional to the intensity of the sensed reflected light.

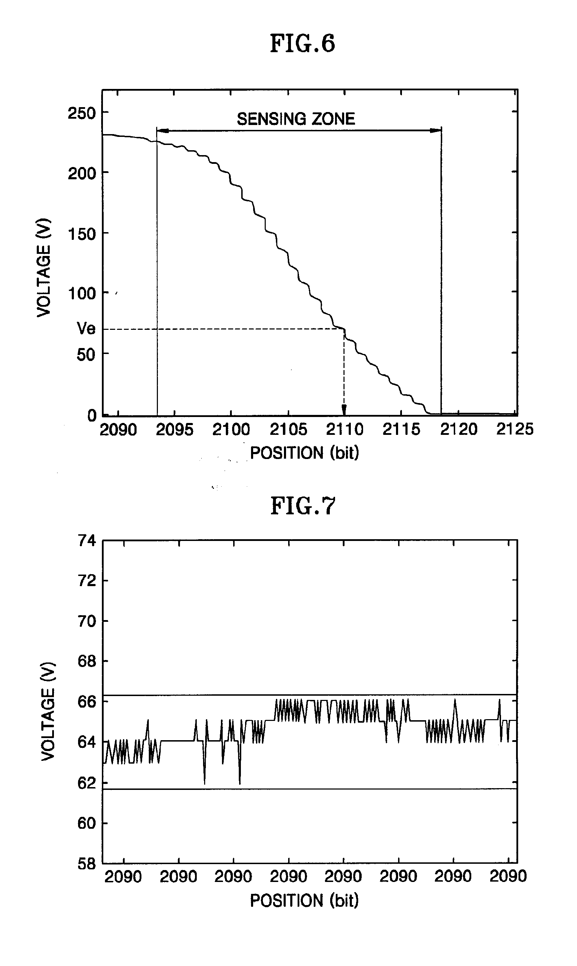

Referring to Figure 6, the reference data may be represented as the relationship between voltage and position (bit). The X-axis of the graph represents the position (bit) of the sheet P, wherein 600 bits represent 1 inch (25.4 mm). The position (bit) is set to a range from 2090 bits to 2125 bits and the voltage represented within the position range has a range of 0 to 240V (*5/256V) (1 unit = 5/256V). The graph illustrates the variation in the amount of reflected light appearing when the trailing edge passes under the optical sensor 15. The amount of reflected light gradually decreases when the trailing edge passes under the optical sensor 15.

When information, which details that the trailing edge zone of the sheet P starts from 2093 bits, is input to the optical sensor controller 19b and the sheet P is fed by a predetermined distance by the feed rollers 12a, 12b, the optical sensor controller 19b outputs a signal to drive the optical sensor 15. Since the length of the edge zone set according to the length of the print media P is stored in the optical sensor controller 19b in advance, the optical sensor controller 19b outputs a driving signal to shine the light beam during a predetermined period of time, set according to the sheet P, to the optical sensor 15. The length of the edge zone is set to 25 bits from 2093 bits to 2118 bits, as shown in the graph in Figure 6, and the edge zone corresponds to the sensing zone.

When the trailing edge position of the sheet P passes under the optical sensor 15, the voltage value sensed in the sensing zone gradually decreases and drops to 0 at the 2118-bit position. The graph representing the voltage values according to the position in the edge zone is stored as the reference data.

Next, if a print start command is input in operation 103, the roller controller 19d drives the feed rollers 12a, 12b by outputting the signal to drive the feed rollers 12a, 12b and feeds the sheet P into the hard copy apparatus. When the sheet P has been fed by a predetermined distance until a predetermined edge zone is located under the optical sensor 15, sensing of the edge zone starts in operation 104.

If the edge zone to be detected is a leading edge zone or a trailing edge zone, the roller controller 19d fixes the sheet P and moves the optical sensor 15. This driving operation is opposite to the driving operation to fix the optical sensor 15 and to feed the sheet P to generate the reference data.

If the edge zone to be detected is a left edge zone or a right edge zone, the roller controller 19d fixes the optical sensor 15 and moves the sheet P. This driving operation is also opposite to a driving operation to stop the transporting operation of the sheet P and the driving operation of the optical sensor 15 to generate the reference data.

The amount of light received in the optical sensor 15 varies due to tilting of the sheet P or uneven driving of the carrier 13 loading the optical sensor 15. The range of the voltage produced by the optical sensor 15 is determined in operation 105, and a most frequently appearing voltage value is set as an edge position voltage value Ve in operation 106.

Figure 7 is a graph illustrating the amount of light measured after the edge zone is scanned in operation 104, corresponding to voltage values according to carrier positions. With reference to Figure 7, the voltage value of the edge zone is between 61.8V and 66.2V according to the position of the sheet P.

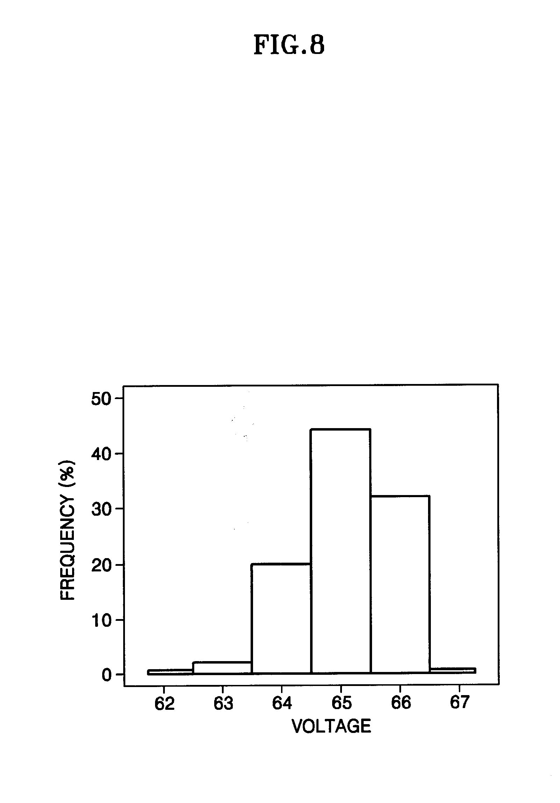

Figure 8 is a graph representing the voltage probabilities in percentage values using the graph values of Figure 7 to find out the most frequently appearing voltage value Ve in operation 106. With reference to Figure 8, a voltage value 65V (*5/256V) appears with an over 40% frequency within the voltage range of the edge zone between 61.8V and 66.2V. Therefore, the voltage value 65V (*5/256V) may be set as the most frequently appearing voltage value Ve.

When the edge position voltage value is set in operation 106, the position of the sheet P corresponding to the most frequently appearing voltage value Ve in the reference data is determined as the edge position in operation 107, such as that which is illustrated in Figure 4. A printing operation is then performed on the edge position in operation 108. Since the edge position voltage value Ve may be set to 65V (*5/256V) in Figure 7, when a position of the sheet P, corresponding to 65V (*5/256V) is determined in Figure 6, 2110 bits may be set as the value of the trailing edge position. That is, the edge position of the sheet P is located at a position 7 bits apart from a position of 2117 bits, the position before the sheet P is discharged.

As is described above, since occurrence of errors may be decreased using a print media edge detection method and apparatus according to the present invention when printing of an edge position is performed, marginless edge position printing is efficiently performed. Also, the method and apparatus can be efficiently used to perform printing with a minute margin.

## Claims

1. An apparatus having a printing function, the apparatus comprising:
at least one sheet feeding roller (12a, 12b, 14a, 14b);
a print head (13) which move transversely with respect to the sheet feed direction;
an optical sensor (15) mounted for movement with print head (13) and sensing of edges of a sheet (P) being fed through the apparatus; and
control means (19) for controlling the or each roller (12a, 12b, 14a, 14b) and the print head (13) and being configured to generate reference data from the output of the optical sensor (15) during scanning of a sheet edge zone thereby, generate measuring data in respect of said edge zone from the output of the optical sensor (15) during printing, set a most frequently appearing voltage value as an edge point voltage value and obtain an edge position from the reference data.

2. A print media edge detection method comprising:
generating reference data by scanning an edge zone of a sheet of print media using an optical sensor and detecting an amount of reflected light;
if the edge zone of the sheet lies in a sensing zone of the optical sensor, calculating measuring data by scanning the edge zone and detecting the amount of reflected light;
checking a voltage range of the edge zone from the measuring data, calculating a most frequently appearing voltage value within the voltage range, and setting the most frequently appearing voltage value as an edge position voltage value; and
setting a position of the sheet corresponding to the edge position voltage value in the reference data as an edge position.

3. The method of claim 2, wherein the generating reference data comprises:
measuring the amount of reflected light by scanning the edge zone using the optical sensor;
converting the amount of reflected light into a voltage value by photoelectric conversion; and
generating the reference data representing the voltage value according to a position of the edge zone.

4. The method of claim 3, further comprising performing scanning by fixing the optical sensor and transporting the sheet of print medium, if the edge zone includes a top edge position or a bottom edge position.

5. The method of claim 3, further comprising performing scanning by stopping the sheet of print medium and moving the optical sensor, if the edge zone includes a left edge position or a right edge position.

6. The method of claim 2, wherein the calculating measuring data comprises:
measuring the amount of reflected light by scanning the edge zone; converting the amount of reflected light into a voltage value by photoelectric conversion; and
generating the reference data representing the voltage value according to a position of the edge zone.

7. The method of claim 6, further comprising performing scanning by stopping the sheet of print medium and moving the optical sensor, if the edge zone includes a top edge position or a bottom edge position.

8. The method of claim 6, further comprising performing scanning by fixing the optical sensor and moving the sheet of print medium, if the edge zone includes a left edge position or a right edge position

9. The method of claim 2, further comprising reflecting an amount of light from the sheet of print medium which is greater than that reflected from a region except the sheet of print medium.

10. The method of claim 2, further comprising placing a reflecting material on the sensing zone of a bottom portion of the sheet to absorb black material.

11. A print media edge detection apparatus comprising:
a roller controller which controls feeding rollers to transport a sheet of print media to a hard copy apparatus and discharging rollers to discharge the sheet;
a carrier controller to control a carrier injecting ink on the sheet to print;
an optical sensor controller to control an optical sensor to scan the sheet to sense an edge zone of the sheet; and
a data calculator which generates reference data from the amount of light measured by scanning the edge zone using the optical sensor, calculates measuring data from the amount of light actually measured in the edge zone while printing, sets a most frequently appearing voltage value as an edge point voltage value, and obtains an edge position from the reference data.

12. The apparatus of claim 11, wherein the data calculator generates the reference data representing a voltage value according to a position of the sheet of print media using an electric signal corresponding to the amount of light measured in the edge zone.

13. The apparatus of claim 11, wherein the data calculator calculates the measuring data representing a voltage value according to a position of the sheet of print media using the amount of light measured by scanning the edge zone by the optical sensor.

14. A print media edge detection apparatus comprising:
a roller controller to transport a sheet of print media to a hard copy apparatus and to discharge the sheet;
a carrier controller to control a carrier to inject ink on the sheet;
an optical sensor controller to sense an edge zone of the sheet; and
a data calculator which generates reference data from the amount of light measured by scanning the edge zone using the optical sensor, calculates measuring data from the amount of light actually measured in the edge zone while printing, sets a most frequently appearing voltage value as an edge point voltage value, and obtains an edge position from the reference data.

15. The apparatus according to claim 14, further comprising feeding rollers to transport the sheet, wherein the roller controller controls the feeding rollers.

16. The apparatus according to claim 14, further comprising discharging roller to discharge the sheet, wherein the roller controller controls the discharging rollers.

17. The apparatus according to claim 14, further comprising an optical sensor to sense the edge zone of the sheet, wherein the optical sensor controller controls the optical sensor.
